# EUROPEAN PATENT APPLICATION

(11) **EP 4 571 927 A1**
(43) Date of publication of application: **18.06.2025**
(21) Application number: 23215822.0
(22) Date of filing: 12.12.2023
(51) Int. Cl.: H01M 10/0583, H01M 10/0585, H01M 10/04, H01M 50/406, H01M 50/429, H01M 50/466, H01M 50/463

(54) **METHOD OF PRODUCING AN ENERGY STORAGE DEVICE AND ENERGY STORAGE DEVICE**

(71) Applicant: CUSTOMCELLS Holding GmbH, 25524 Itzehoe (DE)
(72) Inventor: Giang, Anton, Itzehoe (DE)
(74) Representative: LKGLOBAL Lorenz & Kopf Patentanwalt Attorney at Law PartG mbB

(57) **Abstract**

The present disclosure relates to a method of producing an energy storage device. The energy storage device comprises an electrode-separator stack. The electrode-separator stack comprises at least a first electrode sheet and a second electrode sheet on top of the first electrode sheet. The electrode-separator stack comprises at least a first separator sheet of a separator foil below the first electrode sheet, a second separator sheet of the separator foil between the first electrode sheet and the second electrode sheet, and a third separator sheet of the separator foil on top of the second electrode sheet. The method comprises forming the electrode-separator stack. The method comprises sealing the separator foil at one or more lateral sides of the electrode-separator stack. Sealing the separator foil at one or more lateral sides comprises forming one or more sealed portions of the separator foil that connect the first separator sheet, the second separator sheet and the third separator sheet of the separator foil.

## Description

### FIELD OF THE DISCLOSURE

The present disclosure relates to a method of producing an energy storage device, and to an energy storage device.

### BACKGROUND

Batteries play a critical role in modern society, powering a wide range of devices from portable electronics to electric vehicles. Rechargeable batteries, also referred to as secondary batteries, are often preferred due to their reusability.

The increasing demand for portable electronics and electric vehicles has led to a growing need for batteries with higher energy density, longer lifespan (including number of possible charging cycles of a secondary battery), and improved safety. Furthermore, the shift towards renewable energy sources such as solar and wind power has increased the need for energy storage systems, making batteries an essential technology in the transition to a low-carbon economy.

Due to the importance of batteries, there is a high demand to improve the efficiency and lifespan of batteries.

A battery typically comprises a separator arranged between a cathode and an anode.

Conventionally, adhesive tape is used to position electrodes with respect to the separator.

It is further known from e.g. DE 11 2017 004 334 T5 to use ultrasonic welding of a separator. For example, two separators can be welded together with a heat-resistant layer.

EP 3 561 905 A1 discloses a method for producing a battery element for a battery cell, comprising the following method steps: applying a first electrode material to a first separator coated with a ceramic material, applying a second separator coated with the ceramic material on the arrangement, producing at least one fixing connection in the edge region of the first electrode material between the first and second separators and creating at least one main connection spaced from the at least one fixing connection between the first and the second separator and forming a pocket for the first electrode material.

However, the known solutions the known solutions can be further optimized in terms of their durability, robustness and efficiency.

### SUMMARY OF THE DISCLOSURE

Currently, it remains desirable to provide a method of producing an energy storage device, which is more durable, robust and has an increased efficiency.

The present disclosure relates to a method of producing an energy storage device. The energy storage device comprises an electrode-separator stack. The electrode-separator stack comprises at least a first electrode sheet and a second electrode sheet on top of the first electrode sheet. The electrode-separator stack comprises at least a first separator sheet of a separator foil below the first electrode sheet, a second separator sheet of the separator foil between the first electrode sheet and the second electrode sheet, and a third separator sheet of the separator foil on top of the second electrode sheet. The method comprises forming the electrode-separator stack. The method comprises sealing the separator foil at one or more lateral sides of the electrode-separator stack. Sealing the separator foil at one or more lateral sides comprises forming one or more sealed portions of the separator foil that connect, e.g. respectively, the first separator sheet, the second separator sheet and the third separator sheet of the separator foil.

The present method allows to prevent and/or to avoid that the electrode sheets may get out of place/may move, e.g. with respect to each other. This may enhance the efficiency of the energy storage device, e.g. as the electrode sheets may remain at a fixed position with respect to each other. This may also enhance the calendric lifetime of the energy storage device, especially if the energy storage device is exposed to vibrations. Hence, the durability and robustness of the energy storage device can be increased.

The present method may have the benefit that particles, e.g. microparticles, may be stopped at the sealed portion and may be prevented from causing short circuits. Such particles e.g. may be metal deposits, e.g. Lithium dendrites. Thus, the present method may allow to reduce/avoid parasitic short circuits, that may arise from particles/microparticles. This may enhance the cyclic lifetime of the energy storage device. This may also reduce/avoid self-discharging of the energy storage device.

The present method may allow to secure a position/define a position/restrict a movement of the electrode sheets without the usage of adhesive tape. Avoiding adhesive tapes may have the following advantages: During formation of energy storage device, a predefined pressure may be applied. Having adhesive tapes may lead to an uneven pressure distribution, which can be avoided by the method of the present disclosure. Avoiding an uneven pressure distribution during formation of the energy storage device/battery may increase the lifetime of the energy storage device/battery.

The energy storage device may comprise a pouch foil. Avoiding the use of adhesive tapes means that no adhesive tape protruding from the electrode-separator stack can been seen, e.g. through the pouch foil.

Avoiding the use of adhesive tapes allows to increase the volumetric energy density of the energy storage device. This may be especially relevant if individual energy storage devices form an energy storage device module/energy storage device pack, e.g. a battery module/battery pack. Hence, the efficiency of the energy storage device can be increased.

The energy storage device e.g. may be a battery or a capacitor. The energy storage device may be a battery with a z-folded separator foil ("z-stack"). The energy storage device may be a battery with a jelly-roll type electrode-separator stack. The energy storage device may be a battery with an electrode-separator stack having single separator sheets ("single sheet stack"). Hence, since the method of the present disclosure may be used to produce an arrangement of a z-stack or a jelly roll, an energy storage device with an increased (volume and material) efficiency can be obtained.

The energy storage device may comprise an agent, e.g. an electrolyte.

The separator sheets may be layers of separator foil. The separator foil may be permeable for ions of a metal, which e.g. may be comprised in the agent/the electrolyte. The separator foil may be permeable for the agent/the electrolyte. The first, second and third separator sheet may be connected to each other also before sealing. The first, second and third separator sheet may be sheets of a single separator foil, e.g. a single folded separator foil.

The separator sheets and the one or more sealed portions may define/confine a position of the respective electrode sheets. The one or more sealed portions may define/confine a position of each electrode sheet within the electrode-separator stack.

The first electrode sheet may be an anode sheet or a cathode sheet. The second electrode sheet may be an anode sheet or a cathode sheet, e.g. the respective other one as compared to the first electrode sheet. The electrode sheets may respectively comprise a metal foil, and a coating of an active material.

Sealing e.g. may be performed by welding, e.g. ultrasound welding or laser welding. Sealing e.g. may be performed by heat sealing. Also other sealing methods may be used.

The first electrode sheet may contact, e.g. at its lower (main) surface, the first separator sheet. The first electrode sheet may contact, e.g. at its upper (main) surface, the second separator sheet. The second electrode sheet may contact, e.g. at its lower (main) surface, the second separator sheet. The second electrode sheet may contact, e.g. at its upper (main) surface, the third separator sheet. Each electrode sheet may contact, e.g. at is upper/lower (main) surface, the respective upper and/or lower separator sheet.

Each electrode sheet may fully contact, e.g. at is upper and/or lower (main) surface, the respective upper and/or lower separator sheet. That an electrode sheet fully contacts a respective separator sheet may mean that every portion of the electrode sheet is in contact, e.g. in direct contact, with the respective separator sheet. The first electrode sheet may fully contact the first separator sheet and/or the second separator sheet. The second electrode sheet may fully contact the second separator sheet and/or the third separator sheet.

Each electrode sheet may be fully covered, e.g. at is upper (main) surface, by the respective upper separator sheet. This may mean that the respective separator sheet covers every portion of the respective surface of the respective electrode sheet, and that the respective separator sheet e.g. is in contact, e.g. in direct contact, with every portion of the respective surface of the respective electrode sheet.

The second separator sheet may fully cover the first electrode sheet. The third separator sheet may fully cover the second electrode sheet.

Each electrode sheet may e.g. contact the one or more sealed portions.

The one or more sealed portions may be formed at one or more lateral sides/side edges of the electrode-separator stack and/or of the separator sheets.

Forming the one or more sealed portions may comprise positioning the electrode-separator stack, e.g. with respect to a sealing apparatus, e.g. an ultrasound welding apparatus. Forming the one or more sealed portions may comprise aligning the electrode-separator stack, e.g. with respect to the sealing apparatus. Positioning, aligning and subsequent sealing may be repeated for each lateral side of the electrode-separator stack at which a sealed portion is to be formed.

The one or more sealed portions of the separator foil may directly connect the first separator sheet, the second separator sheet and the third separator sheet of the separator foil, i.e. without any other object in between.

Features disclosed with respect to a sealed portions may apply to other sealed portions of the one or more sealed portions, as appropriate, unless stated otherwise.

The first separator sheet and the second separator sheet of the separator foil may be connected by a first folding edge. The second separator sheet and the third separator sheet of the separator foil may be connected by a second folding edge.

The first separator sheet and the second separator sheet may be comprised in a single folded separator foil, e.g. before sealing. The second separator sheet and the third separator sheet may be comprised in a single folded separator foil, e.g. before sealing. The first, second and third separator sheet may be comprised in a single folded separator foil, e.g. before sealing.

The separator foil may be z-folded. The first/second folding edge may be folding edges of the z-folded separator foil.

The one or more sealed portions may comprise the first folding edge and/or the second folding edge. E.g., a first sealed portion may comprise the first folding edge and a second sealed portion may comprise the second folding edge. It is also possible that a single sealed portion comprises the first folding edge and the second folding edge. Sealing the separator foil may comprise sealing a first/second folding edge of the separator foil. The first/second folding edge may be comprised at lateral sides of the electrode-separator stack.

It is also possible that the separator sheets are distinct and separated from each other, prior to the sealing. E.g., the electrode-separator stack may be a single sheet stack. The separator sheets may then be connected to each other during sealing, by means of the one or more sealed portions.

Forming the electrode-separator stack may comprise folding the separator foil at a first folding edge, the first folding edge connecting the first separator sheet and the second separator sheet. Forming the electrode-separator stack may comprise arranging the first electrode sheet in the folded separator foil between the first separator sheet and the second separator sheet. Forming the electrode-separator stack may comprise folding the separator foil at a second folding edge, the second folding edge connecting the second separator sheet and the third separator sheet. Forming the electrode-separator stack may comprise arranging the second electrode sheet in the folded separator foil between the second separator sheet and the third separator sheet.

Forming the electrode-separator stack may comprise providing the separator foil. Forming the electrode-separator stack may comprise providing the first electrode sheet on top of the separator foil. Forming the electrode-separator stack may comprise folding the separator foil at a first folding edge, the first folding edge connecting the first separator sheet and the second separator, e.g. such that the second separator sheet is on top of the first electrode sheet. Forming the electrode-separator stack may comprise providing the second electrode sheet on top of the second separator sheet. Forming the electrode-separator stack may comprise folding the separator foil at a second folding edge, the second folding edge connecting the second separator sheet and the third separator sheet, e.g. such that the third separator sheet is on top of the second electrode sheet.

The separator foil may be sealed at two lateral sides of the electrode-separator stack that e.g. may be opposite of each other, thereby e.g. forming two sealed portions that connect, e.g. respectively, the first separator sheet, the second separator sheet and the third separator sheet of the separator foil. The first and the second electrode sheet may be located between the two sealed portions. The sealed portions may comprise the first folding edge and/or the second folding edge, e.g. respectively.

In this way, the sealed portions may define/confine a position of the first and the second electrode sheet.

It is also possible that a single sealed portion is located at two opposite sides of the electrode-separator stack/extends across two opposite sides of the electrode-separator stack, having the first electrode sheet and the second electrode sheet located in-between.

The electrode-separator stack may comprise e.g. one or more additional electrode sheets on top of the first and the second electrode sheet, and e.g. one or more additional separator sheets of the separator foil. Between each pair of adjacent electrode sheets, a respective separator sheet of the separator foil may be arranged. The one or more sealed portions may connect, e.g. respectively, all separator sheets of the separator foil at the respective lateral side of the electrode-separator stack. Optionally, the separator foil may be folded alternately. Optionally, each pair of adjacent separator sheets of the separator foil may be connected to each other via a respective folding edge. Optionally, the number of electrode sheets may be 3 or more. Optionally, the number of electrode sheets may be 150 or less.

Having more than two electrode sheets may allow to achieve a particularly high volumetric energy density and thus an increased efficiency.

Features disclosed with respect to the first/second electrode sheets, with respect to the first/second/third separator sheet, and/or with respect to the first/second folding edge may also apply to further electrode sheets/separator sheets/folding edges, as appropriate, unless otherwise stated.

The one or more sealed portions may hermetically connect, e.g. respectively, two adjacent separator sheets.

The one or more sealed portions may hermetically connect, e.g. respectively, the first and the second separator sheet and/or all separator sheets.

This may have the advantage that particles, e.g. microparticles, may be stopped particularly well at the one or more sealed portions and may be prevented from causing short circuits. Such particles e.g. may be metal deposits, e.g. Lithium dendrites. This may allow to reduce/avoid parasitic short circuits, that may arise from particles/microparticles. This may enhance the cyclic lifetime of the energy storage device. This may also reduce/avoid self-discharging of the energy storage device.

During wetting, an agent, e.g. an electrolyte, can still pass through the separator, due to the permeability of the separator.

E.g., in the case of welding, the one or more sealed portions may be a welding seams. The sealed portions/welding seams may be hermetic, e.g. they may comprise no holes/openings.

E.g., at least one lateral side of the electrode-separator stack may be hermetically sealed. E.g., all lateral sides of the electrode-separator stack, that do not comprise a tab region of an electrode sheet, may be hermetically sealed. E.g., also the lateral sides of the electrode-separator stack that comprise a tab region of an electrode sheet may be hermetically sealed, e.g. except the portions that comprise the tab regions and optionally surrounding portions.

The one or more sealed portions may comprise, e.g. respectively, a plurality of pathways extending substantially from one of the electrode sheets to a surface of a lateral side of the electrode-separator stack, e.g. such that openings remain between (or at the exits of the) the pathways. Optionally, the pathways and/or the openings may be inclined with respect to the surface of the lateral side of the electrode-separator stack.

The openings may be/may comprise unsealed portions. The pathways may be/may comprise sealed portions.

The one or more lateral sides of the electrode-separator stack may comprise, e.g. respectively, a plurality of pathways/sealed portions extending substantially from one of the electrode sheets to a surface of a lateral side of the electrode-separator stack, e.g. such that openings remain between (or at the exits of the) the pathways/the sealed portions. Optionally, the pathways/sealed portions and/or the openings may be inclined with respect to the surface of the lateral side of the electrode-separator stack.

This may enhance/facilitate/accelerate wetting of the electrode sheets, as an agent may enter into the stack via the openings.

The pathways may be formed e.g. by spot-welding. The openings may be openings for the agent. The pathways may also be considered as a web (e.g. formed by welding). Hence, the pathways may be considered as the material around the openings. In other words, the pathways may encase the openings and as such define or provide the openings.

The openings may have a diameter, e.g. a maximal diameter, of 1mm or less, 500 µm or less, or 100 µm or less, or 50 µm or less. The one or more sealed portions may be formed with openings/may have openings in between having a maximal diameter of 1mm or less, 500 µm or less, or 100 µm or less, or 50 µm or less. Having openings with such a maximal diameter may block/stop particles, e.g. microparticles, at the sealed portion, and may prevent such particles from causing short circuits.

Inclined pathways/openings may increase the distance a particle/microparticle has to travel in order to exit the electrode-separator stack, while the additional distance may be not meaningful for the agent/electrolyte wetting the electrode sheet. Hence, the wettability may be improved while at the same time, the risk of particles/microparticles exiting the electrode-separator stack and causing short circuits remains limited.

The pathways/openings may meet the surface of the lateral side at an angle of 75 degrees or less, or 60 degrees or less, or 45 degrees or less, or 30 degrees or less, or 15 degrees or less. The pathways/openings may be inclined with respect to the surface of the lateral side of the electrode-separator stack at an angle of 75 degrees or less, or 60 degrees or less, or 45 degrees or less, or 30 degrees or less, or 15 degrees or less.

E.g. if the sealed portion is formed by ultrasound welding, the ultrasound welding apparatus may comprise a relief surface (e.g., corresponding to pathways, winded pathways, and/or a labyrinth-like structure comprising winded pathways).

The one or more sealed portions may comprise, e.g. respectively, a labyrinth-like structure, e.g. comprising a plurality of winded pathways extending substantially from the electrode sheets (i.e. from an inner region of the stack, where the electrode sheets are located) to a surface of a lateral side of the electrode-separator stack (i.e. to an outer surface of the stack). The pathways may provide and/or guide openings from the inner region of the stack to the outer surface of the stack.

The pathways may be arranged such that in a perpendicular extension from the electrode sheet to the surface of the lateral side of the electrode-separator stack, a plurality of pathways are crossed.

Each electrode sheet may comprise a tab region that extends beyond the separator foil. Sealing the separator foil may comprise sealing the separator foil at one or more/all lateral sides of the electrode-separator stack that e.g. do not comprise a tab region. Sealing the separator foil may comprise sealing the separator foil at all lateral sides of the electrode-separator stack, e.g. except from portions of the lateral sides of the electrode-separator stack at which the respective tab regions extend beyond the separator foil.

The tab regions may serve to connect the respective electrode sheet to the outside of the energy storage device.

Sealing the separator foil may comprise sealing the separator foil at two, three, four or more lateral sides of the electrode-separator stack.

The electrode-separator stack /the energy storage device may have a same-side tab configuration. Here, the tab regions of the electrode sheets are located on the same lateral side of the electrode-separator stack.

E.g. then, the separator foil may e.g. be sealed at least at three lateral sides of the electrode-separator stack (assuming that the electrode-separator stack has in total four lateral sides), e.g. excluding the lateral side that comprises a tab region. The separator foil may e.g. be sealed also at all lateral sides of the electrode-separator stack, e.g. at all four lateral sides.

The electrode-separator stack/the energy storage device may have a counter-tab configuration. Here, the tab regions of the electrode sheets are located on opposite lateral sides of the electrode-separator stack. E.g., the tab regions of anode sheets may be located on one side, and the tab regions of cathode sheets may be located on an opposite side.

E.g. then, the separator foil may e.g. be sealed at least at two lateral sides of the electrode-separator stack (assuming that the electrode-separator stack has in total four lateral sides), e.g. excluding the two lateral sides that respectively comprise a tab region. The separator foil may e.g. be sealed also at all lateral sides of the electrode-separator stack, e.g. at all four lateral sides.

Sealing the separator foil may comprise sealing, e.g. only sealing, the separator foil at one or more/all lateral sides of the electrode-separator stack at which the respective tab regions extend beyond the separator foil, except from portions of the lateral sides of the electrode-separator stack at which the respective tab regions extend beyond the separator foil.

Sealing the separator foil may comprise sealing, e.g. only sealing, the separator foil at one or more/all lateral sides of the electrode-separator stack that e.g. do not comprise a tab region.

In a top view of the electrode-separator stack, the separator sheets may protrude from the electrode sheets on at least one lateral side in an edge region of the electrode-separator stack. The one or more sealed portions may be arranged, e.g. respectively, at the edge region. Optionally, prior to sealing the separator foil, a predefined pressure may be applied to the separator foil at the edge region, e.g. such that air is evacuated from the edge region.

This may be helpful for welding, e.g. for ultrasound welding.

The pressure may be applied e.g. by means of the welding tools and/or by means of a dedicated stamp.

The method may also comprise, e.g. prior to sealing the separator foil, another predefined pressure to the electrode sheets, e.g. by means of a stamp.

This may allow to avoid slipping/change of position of the electrode sheets, e.g. during the sealing.

Sealing the separator foil may comprise welding, e.g. optionally ultrasound welding or laser welding. Sealing the separator foil may comprise heat sealing.

Ultrasound welding may have the advantage that a heat impact on the separator can be minimized, such that the structure of the separator foil, outside from the sealed portions, may remain unchanged during the sealing.

Ultrasound welding may be performed by means of a horn/sonotrode and an anvil, having the separator foil arranged in between. The horn/sonotrode and the anvil may be respectively movable towards each other, i.e. in a top-down direction of the electrode-separator stack, e.g. during sealing. This may allow to generate sealed portions that are arranged above the bottom of the electrode-separator stack and below the top of the electrode-separator stack, which may have the benefit of reduced stress in the upper/lower separator sheets.

Ultrasound welding may be performed by means of spot-welding, which may also form pathways in the sealed portion. The pathways may extend substantially from one of the electrode sheets to a surface of a lateral side of the electrode-separator stack, e.g. such that openings remain between the pathways.

In a side view of the electrode-separator stack, the one or more sealed portions, e.g. respectively, may be arranged e.g. above the bottom of the electrode-separator stack and e.g. below the top of the electrode-separator stack, such that e.g. a lower separator sheet is bent upwards in the edge region and e.g. an upper separator sheet is bent downwards in the edge region.

This may have the benefit of reduced stress in the upper/lower separator sheets. This may facilitate sealing.

The upper/lower separator sheets of the electrode-separator stack may have a larger surface as compared to the central separator sheet. E.g., the surface of the separator sheets may increase with the distance from the central separator sheet, as e.g. more overlap is needed in order to reach the (central) sealed portion. Hence, this may facilitate sealing of the separator foil.

The separator foil may comprise at least one of the following materials: cellulose, lignocellulose. The separator foil may further comprise a coating comprising a coating material. The one or more sealed portions may connect, e.g. respectively, the respective coatings of the first and the second separator sheet of the separator foil.

The separator coating material may comprise a polyolefin and/or polyvinylidene fluoride.

The separator may be porous/may comprise porous portions. E.g., the separator foil may be porous.

E.g., the separator foil may have a porosity of e.g. 40-60%. During sealing, such a separator foil may experience significant shrinking, e.g. if the separator foil is fully melted. Using a separator foil comprising a coating may allow to only melt the coating, and may thus avoid/reduce shrinking of the separator foil as such.

During sealing, the separator foil material may remain (substantially) unchanged, while the coatings of the separator sheets may be connected and while the sealed portion may comprise the connected coatings/may connect the coatings.

The present disclosure also relates to an energy storage device comprising an electrode-separator stack. The electrode-separator stack comprises at least a first electrode sheet and a second electrode sheet on top of the first electrode sheet. The electrode-separator stack comprises at least a first separator sheet of a separator foil below the first electrode sheet, a second separator sheet of the separator foil between the first electrode sheet and the second electrode sheet, and a third separator sheet of the separator foil on top of the second electrode sheet. The separator foil comprises one or more sealed portions at one or more lateral sides of the electrode-separator stack. The one or more sealed portions connect, e.g. respectively, the first separator sheet, the second separator sheet and the third separator sheet of the separator foil.

Optionally, the energy storage device may be produced by a method as described above.

All technical implementation details and advantages described with respect to the method of the present invention are self-evidently mutatis mutandis applicable for the apparatus of the present invention and vice versa.

The technology provided by the present disclosure may be applied in various types of batteries such as lithium-ion secondary batteries. Other compatible examples of batteries may be sodium-ion batteries, potassium-ion batteries, magnesium-ion batteries, calcium-ion batteries or aluminum-ion batteries. The technology provided by the present disclosure may also be applied in various types of metal ion capacitors, such as lithium-ion capacitors.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

### BRIEF DESCRIPTION OF THE DRAWINGS

Fig. 1 shows a flowchart of a method 10 of producing an energy storage device according to examples of the present disclosure.
Fig. 2a shows a cross-sectional side view of an example of an electrode-separator stack prior to sealing. Fig. 2b shows a cross-sectional side view of the electrode-separator stack of Fig. 2a after sealing, according to examples of the present disclosure.
Fig. 3a shows a cross-sectional side view of an example of an electrode-separator stack prior to sealing. Fig. 3b shows a cross-sectional side view of the electrode-separator stack of Fig. 3a after sealing, according to examples of the present disclosure.
Fig. 4a shows a cross-sectional side view of an example of an electrode-separator stack prior to sealing. Fig. 4b shows a cross-sectional side view of the electrode-separator stack of Fig. 4a after sealing, according to examples of the present disclosure.
Fig. 5a shows a cross-sectional side view of an example of an electrode-separator stack prior to a first sealing step. Fig. 5b shows a cross-sectional side view of the electrode-separator stack of Fig. 5a after the first sealing step, and during a second sealing step, according to examples of the present disclosure.
Figs. 6a and 6b respectively show a cross-sectional top view of an energy storage device according to examples of the present disclosure, the energy storage device respectively having a same-side tab configuration. Figs. 6c and 6d respectively show a cross-sectional top view of an energy storage device according to examples of the present disclosure, the energy storage device respectively having a counter-tab configuration.
Figs. 7a-7d respectively show an enlarged section of respective cross-sectional top views of energy storage devices according to examples of the present disclosure.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

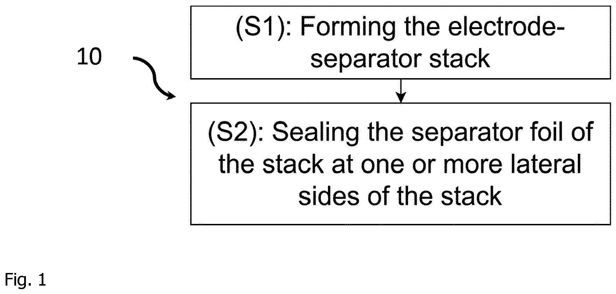

Fig. 1 shows a flowchart of a method 10 of producing an energy storage device according to examples of the present disclosure.

In step S1, the electrode-separator stack is formed. The electrode-separator stack comprises at least a first electrode sheet and a second electrode sheet on top of the first electrode sheet, and at least a first separator sheet below the first electrode sheet, a second separator sheet between the first electrode sheet and the second electrode sheet, and a third separator sheet on top of the second electrode sheet.

In step S2, the separator foil of the electrode-separator stack is sealed at one or more lateral sides of the electrode-separator stack. Sealing the electrode-separator stack comprises forming one or more sealed portions of the separator foil that connect the first separator sheet, the second separator sheet and the third separator sheet.

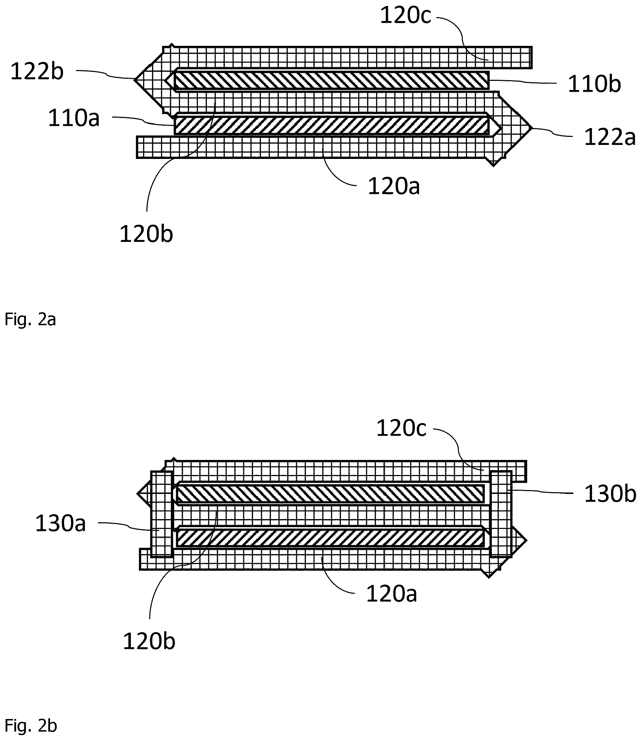

Fig. 2a shows an example of an electrode-separator stack prior to sealing. Fig. 2b shows the electrode-separator stack of Fig. 2a after sealing, according to examples of the present disclosure.

In Fig. 2a, the first separator sheet 120a and the second separator sheet 120b are connected by first folding edge 122a. The second separator sheet 120b and the third separator sheet 120c are connected by second folding edge 122a. The first separator sheet 120a, the second separator sheet 120b and the third separator sheet 120c belong to/are comprised in a single folded separator foil, also comprising the first folding edge 122a and the second folding edge 122b.

Fig. 2b shows sealed portions 130a, 130b that are formed by sealing the electrode-separator stack at two lateral sides, the two lateral sides being opposite to each other.

In the figures, the sealed portions 130a, 130b are shown separately, but may be comprised in a single sealed portion extending across the respective lateral sides of the electrode-separator stack, being opposite to each other.

The sealed portions 130a, 130b define/confine a position of the first electrode sheet 120a and the second electrode sheet 120b, respectively.

In Figs. 2a and 2b, the separator foil is a single separator foil comprising all separator sheets, and being folded, e.g. z-folded.

The separator foil is sealed at two lateral sides of the electrode-separator stack that are opposite of each other, thereby forming two sealed portions 130a, 130b that respectively connect the first separator sheet 120a, the second separator sheet 120b and the third separator sheet 120c of the separator foil. The first and the second electrode sheet 110a, 110b are located between the two sealed portions 130a, 130b. The sealed portions 130a, 130b comprise the first folding edge 122a and the second folding edge 122b. For reasons of comprehensibility and clarity, some reference numbers of Fig. 2a are not shown in Fig. 2b.

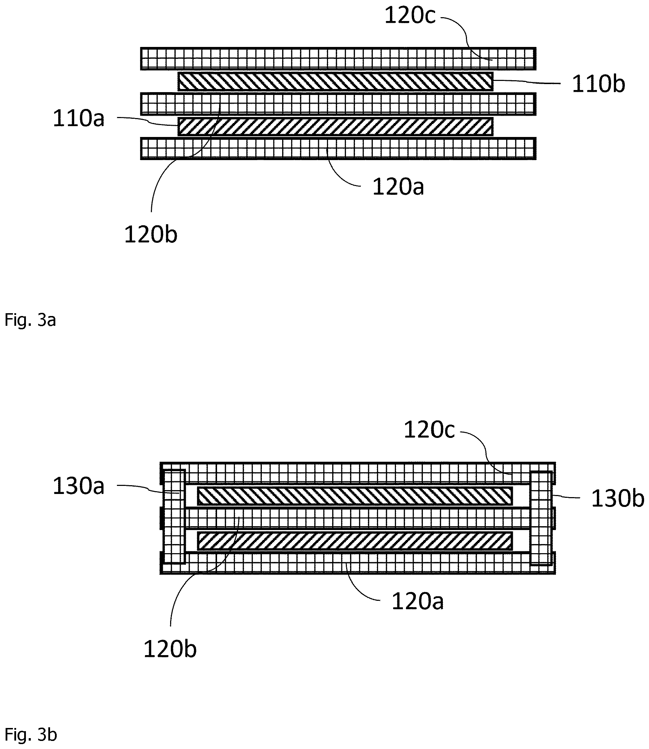

Figs. 3a and 3b are similar to Figs. 2a and 2b. Fig. 3a shows an example of an electrode-separator stack prior to sealing. Fig. 3b shows the electrode-separator stack of Fig. 3a after sealing, according to examples of the present disclosure.

Features disclosed with respect to Figs. 2a-2b also apply to Figs. 3a-3b as appropriate.

Figs. 3a and 3b show an electrode-separator stack being a single-sheet stack, i.e. comprising single separator sheets 120a, 120b, 120c that are not connected to each other prior to sealing. After sealing (cf. Fig. 3b), the sealed portions 130a, 130b connect the three separator sheets 120a, 120b, 120c.

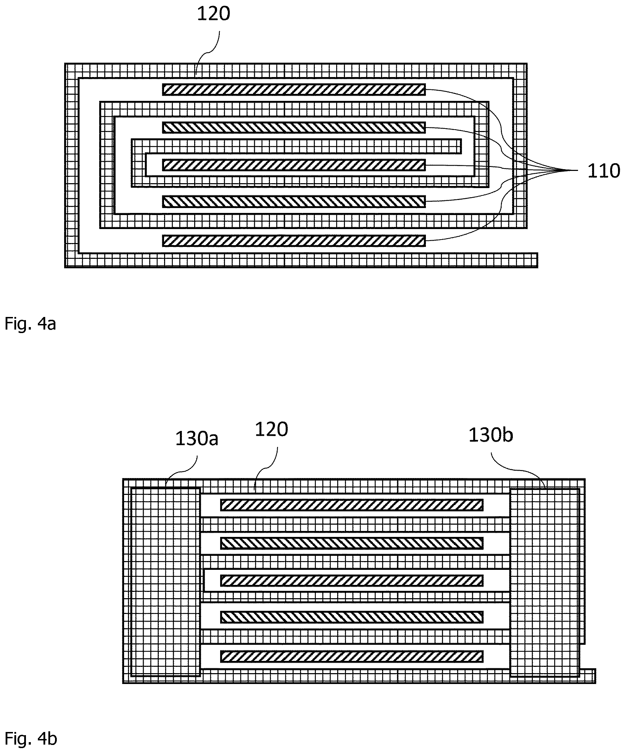

Figs. 4a and 4b are similar to Figs. 2a-2b and 3a-3b. Fig. 4a shows an example of an electrode-separator stack prior to sealing. Fig. 4b shows the electrode-separator stack of Fig. 4a after sealing, according to examples of the present disclosure.

Features disclosed with respect to Figs. 2a-2b and 3a-3b also apply to Figs. 4a-4b, as appropriate.

Figs. 4a and 4b show a jelly roll electrode-separator stack. The single separator foil 120 comprises the separator sheets (not separately indicated by respective reference numbers). The separator sheets are connected to each other by means of folding edges. The electrode-separator stack of Figs. 4a and 4b comprises several electrode sheets 110. After sealing (cf. Fig. 4b), the sealed portions 130a, 130b connect all separator sheets of the separator foil 120.

The electrode-separator stacks of Figs. 4a and 4b comprise additional electrode sheets 110 on top of the first and the second electrode sheet, and additional separator sheets of the separator foil. Between each pair of adjacent electrode sheets, a respective separator sheet of the separator foil is arranged. The sealed portions 130a, 130b respectively connect all separator sheets 120 of the separator foil at the respective lateral sides of the electrode-separator stack.

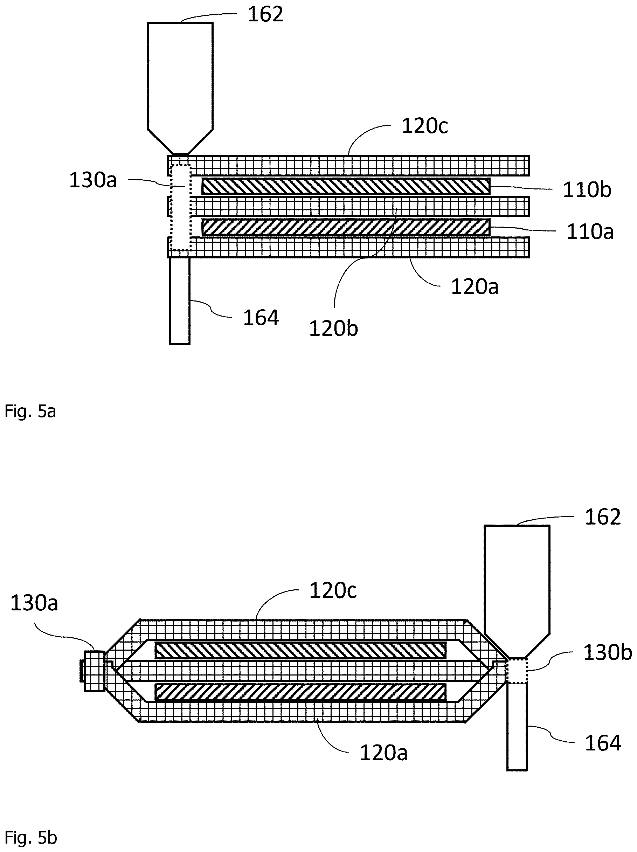

Fig. 5a shows a cross-sectional view of an example of an electrode-separator stack prior to a first sealing step of forming a first sealed portion 130a. Fig. 5b shows a cross-sectional view of the electrode-separator stack of Fig. 5a after the first sealing step, and during a second sealing step of forming a second sealed portion 130b, according to examples of the present disclosure.

Figs. 5a and 5b show a horn/sonotrode 162 and an anvil 164, which in this example are used for forming the sealed portions by ultrasound welding. In Fig. 5a, the sealed portion 130a is not yet formed but already indicated by the white rectangle having the dotted contour. In Fig. 5b, the sealed portion 130a is indicated, and the sealed portion 130b is (to be) formed (indicated by the white rectangle having the dotted contour).

In Figs. 5a and 5b, the separator sheets 120a, 120b, 120c protrude from the electrode sheets 110a, 110b on two lateral sides in an edge region of the electrode-separator stack. The sealed portions 130a, 130b are respectively arranged at the edge region (cf. especially Fig. 5b). Prior to sealing the separator foil, i.e. ultrasound welding the separator foil, a predefined pressure is applied to the separator foil, such that air is evacuated from the edge region. The pressure is applied by means of the horn/sonotrode 162 and the anvil 164 (cf. especially Fig. 5b).

The sealed portions 130a and 130b are arranged above the bottom of the electrode-separator stack and below the top of the electrode-separator stack. The third separator sheet 120c (upper separator sheet) is bent downwards, and the first separator sheet 120a (lower separator sheet) is bent upwards, as shown in Fig. 5b. In other words, the sealed portions 130a and 130b may be smaller (in a vertical direction) than the height (i.e. vertical extension) of the electrode-separator stack. For example, the sealed portions 130a and 130b may thus pull the single separator sheets together.

It is noted that the examples of fig. 2b, 3b and 4b are rather schematic. Also in these examples it is possible that the sealed portions 130a and 130b may be smaller (in a vertical direction) than the height (i.e. vertical extension) of the electrode-separator stack. For example, the sealed portions 130a and 130b may thereby pull the single separator sheets together.

The horn/sonotrode 162 and the anvil 164 are respectively movable towards each other, i.e. in a top-down direction of the electrode-separator stack, e.g. during sealing. This allows to generate sealed portions 130a, 130b that are arranged above the bottom of the electrode-separator stack and below the top of the electrode-separator stack, which has the benefit of reduced stress in the upper/lower separator sheets.

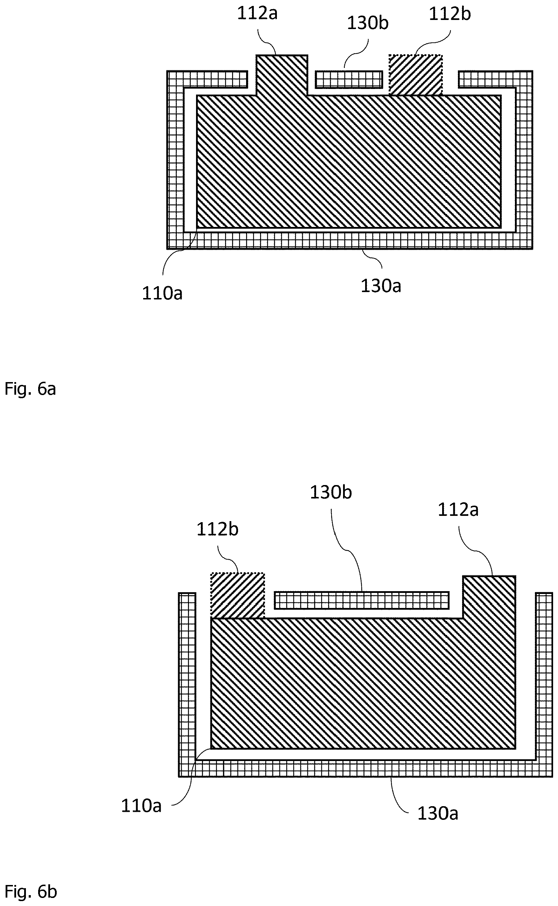

Figs. 6a and 6b respectively show a cross-sectional view of an energy storage device (e.g. a stack seen from top or from bottom) according to examples of the present disclosure, the energy storage device respectively having a same-side tab configuration.

Figs. 6a and 6b show a first electrode sheet 110a comprising a tab region 112a extending beyond the separator foil. Figs. 6a and 6b also show a tab region 112b of the second electrode sheet 110b (the second electrode sheet 110b is otherwise not shown in Figs. 6a-6d). Also the tab region 112b extends beyond the separator foil. The tab region 112b of the second electrode sheet 110b has a dotted contour. Figs. 6a and 6b also show sealed portions 130a and 130b, which connect the separator sheets.

The separator foil is sealed at all lateral sides of the electrode-separator stack, except from portions of the lateral sides of the electrode-separator stack at which the tab regions 112a, 112b extend beyond the separator foil. It is also possible to only seal the separator foil at one or more lateral sides of the electrode-separator stack that do not comprise a tab region (this configuration is not shown in Figs. 6a-6b). It is also possible to only seal the separator foil at one or more lateral sides of the electrode-separator stack that comprise a tab region (this configuration is not shown in Figs. 6a-6b).

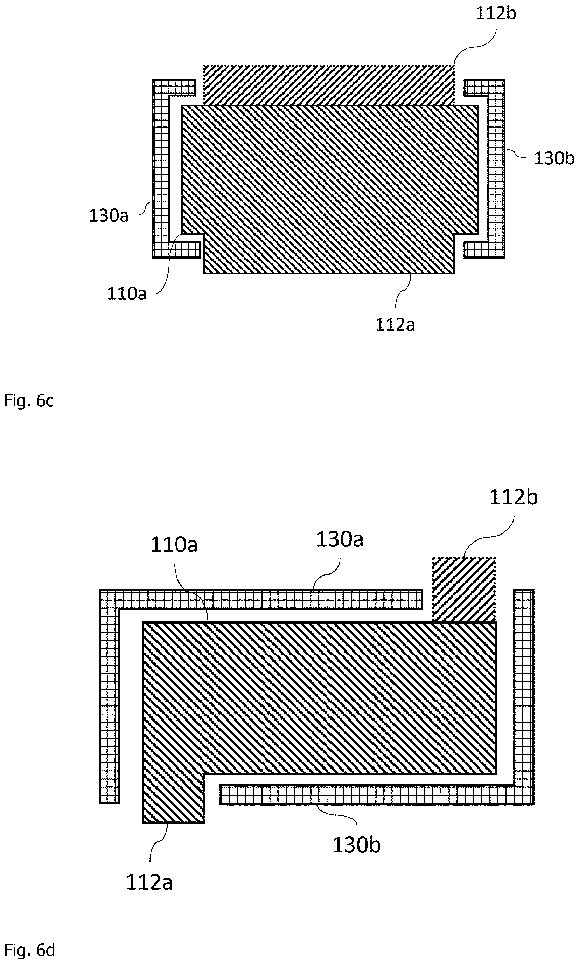

Figs. 6c and 6d respectively show a cross-sectional view of an energy storage device according to examples of the present disclosure, the energy storage device respectively having a counter-tab configuration.

Figs. 6c and 6d show a first electrode sheet 110a comprising a tab region 112a extending beyond the separator foil. Figs. 6c and 6d also show a tab region 112b of the second electrode sheet 110b (the second electrode sheet 110b is otherwise not shown in Figs. 6a-6d). Also the tab region 112b extends beyond the separator foil. The tab region 112b of the second electrode sheet 110b has a dotted contour. Figs. 6c and 6d also show sealed portions 130a and 130b, which connect the separator sheets.

The separator foil is sealed at all lateral sides of the electrode-separator stack, except from portions of the lateral sides of the electrode-separator stack at which the tab regions 112a, 112b extend beyond the separator foil. It is also possible to only seal the separator foil at one or more lateral sides of the electrode-separator stack that do not comprise a tab region (this configuration is not shown in Figs. 6c-6d). It is also possible to only seal the separator foil at one or more lateral sides of the electrode-separator stack that comprise a tab region (this configuration is not shown in Figs. 6c-6d).

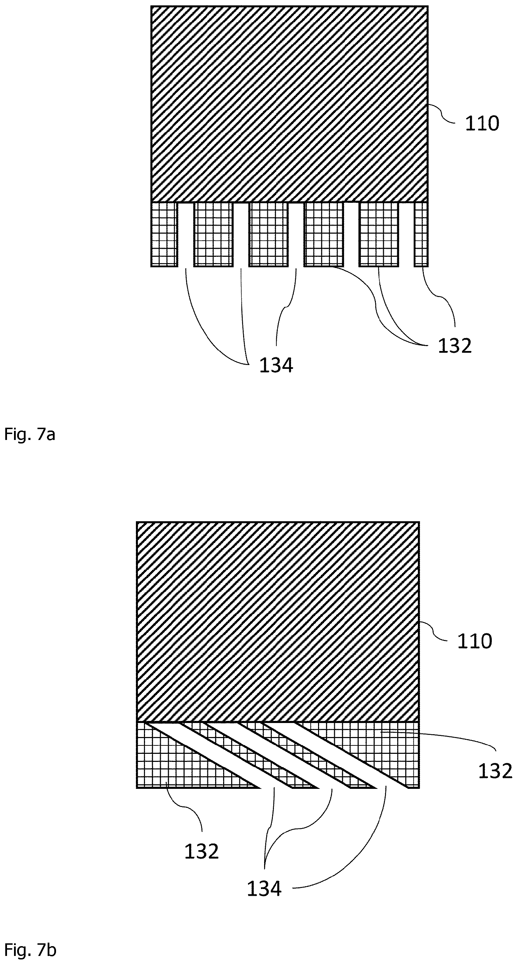

Figs. 7a-7d respectively show an enlarged section of respective cross-sectional views of energy storage devices according to examples of the present disclosure. The openings 134 may be/may comprise unsealed portions. The pathways may be/may comprise sealed portions 132.

No connections between the pathways 134 are shown in Figs. 7a-7d, as Figs. 7a-7d depict cross-sectional views. The pathways 134 are connected by the respective separator sheets (connections are not shown in Figs. 7a-7d).

In Fig. 7a, the sealed portion 130 comprises a plurality of pathways 132 extending substantially from the electrode sheet 110 to a surface of a lateral side of the electrode-separator stack, such that openings 134 remain between the pathways.

In Fig. 7b, the pathways 132, and also the openings 134, are inclined with respect to the surface of the lateral side of the electrode-separator stack.

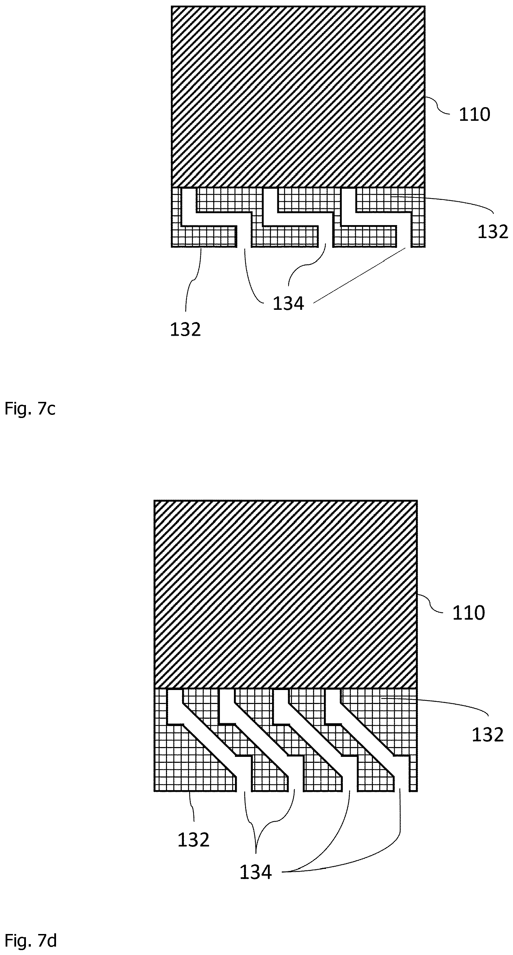

In Figs. 7c and 7d, the sealed portion 130 comprise a labyrinth-like structure comprising a plurality of winded pathways 132 extending substantially from the electrode sheet 110 to a surface of a lateral side of the electrode-separator stack, such that openings 134 remain between the winded pathways.

In Figs. 7b and 7d, the pathways 132 are arranged such that in a perpendicular extension from the electrode sheet 110 to the surface of the lateral side of the electrode-separator stack, a plurality of pathways 132 are crossed. In Figs. 7b and 7d, the openings 134 are arranged such that in a perpendicular extension from the electrode sheet 110 to the surface of the lateral side of the electrode-separator stack, a plurality of openings 134 are crossed.
In Figs. 7a-7d, the electrode sheet 110 is shown in direct contact with the sealed portion 130/the pathways 132. The electrode sheet does not need to be in direct contact with the sealed portion 130/the pathways 132, but it may be. It is also possible that the electrode sheet is not in direct contact with the sealed portion 130/the pathways 132.

In some figures, small gaps between the electrode sheets and the separator sheets are shown. These gaps are shown for facilitating the clarity of the figures. The gaps should not be interpreted such that they necessarily disclose no contact/no direct contact/no full contact between the electrode sheets and the separator sheets. The electrode sheets may be in contact, e.g. full and/or direct contact, with the respective separator sheets. It is also possible that the electrode sheets are not in contact, e.g. full and/or direct contact, with the respective separator sheets.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

## Claims

1. A method (10) of producing an energy storage device,
wherein the energy storage device comprises an electrode-separator stack, comprising:
at least a first electrode sheet (110a) and a second electrode sheet (110b) on top of the first electrode sheet (110a),
at least a first separator sheet (120a) of a separator foil below the first electrode sheet (110a), a second separator sheet (120b) of the separator foil between the first electrode sheet (110a) and the second electrode sheet (110b), and a third separator sheet (120c) of the separator foil on top of the second electrode sheet (110b),
wherein the method comprises:
forming (S1) the electrode-separator stack, and
sealing (S2) the separator foil at one or more lateral sides of the electrode-separator stack, comprising: forming one or more sealed portions (130a, 130b) of the separator foil that connect the first separator sheet (120a), the second separator sheet (120b) and the third separator sheet (120c) of the separator foil.

2. The method according to claim 1,
wherein the first separator sheet (120a) and the second separator sheet (120b) of the separator foil are connected by a first folding edge (122a) and
wherein the second separator sheet (120b) and the third separator sheet (120c) of the separator foil are connected by a second folding edge (122b).

3. The method according to claim 1 or 2,
wherein forming the electrode-separator stack comprises:
folding the separator foil at a first folding edge, the first folding edge (122a) connecting the first separator sheet (120a) and the second separator sheet (120b),
arranging the first electrode sheet (110a) in the folded separator foil between the first separator sheet (120a) and the second separator sheet (120b),
folding the separator foil at a second folding edge (122b), the second folding edge (122b) connecting the second separator sheet (120b) and the third separator sheet (120c), and
arranging the second electrode sheet (110b) in the folded separator foil between the second separator sheet (120b) and the third separator sheet (120c), or
providing the separator foil,
providing the first electrode sheet (110a) on top of the separator foil,
folding the separator foil at a first folding edge (122a), the first folding edge (122a) connecting the first separator sheet (120a) and the second separator sheet (120b), such that the second separator sheet (120b) is on top of the first electrode sheet (110a),
providing the second electrode sheet (110b) on top of the second separator sheet (120b),
folding the separator foil at a second folding edge (122b), the second folding edge (122b) connecting the second separator sheet (120b) and the third separator sheet (120c), such that the third separator sheet (120c) is on top of the second electrode sheet (110b).

4. The method according to any one of the preceding claims,
wherein the separator foil is sealed at two lateral sides of the electrode-separator stack that are opposite of each other, thereby forming two sealed portions (130a, 130b) that connect the first separator sheet (120a), the second separator sheet (120b) and the third separator sheet (120c) of the separator foil,
wherein the first and the second electrode sheet (110a, 110b) are located between the two sealed portions (130a, 130b), and/or
the sealed portions (130a, 130b) comprise the first folding edge (122a) and/or the second folding edge (122b).

5. The method according to any one of the preceding claims, wherein the electrode-separator stack comprises one or more additional electrode sheets on top of the first and the second electrode sheet (110a, 110b), and one or more additional separator sheets of the separator foil,
wherein between each pair of adjacent electrode sheets, a respective separator sheet of the separator foil is arranged,
wherein the one or more sealed portions (130a, 130b) connect all separator sheets of the separator foil at the respective lateral side of the electrode-separator stack,
wherein optionally, the separator foil is folded alternately and each pair of adjacent separator sheets of the separator foil is connected to each other via a respective folding edge,
wherein optionally, the number of electrode sheets is 3 or more and 150 or less.

6. The method according to any one of the preceding claims, wherein the one or more sealed portions (130a, 130b) hermetically connect two adjacent separator sheets.

7. The method according to any one of the preceding claims, wherein the one or more sealed portions (130a, 130b) comprise a plurality of pathways (132) extending substantially from one of the electrode sheets to a surface of a lateral side of the electrode-separator stack, such that openings (134) remain between the pathways (132),
wherein optionally, the pathways (132) are inclined with respect to the surface of the lateral side of the electrode-separator stack.

8. The method according to any one of the preceding claims, wherein the one or more sealed portions (130a, 130b) comprise a labyrinth-like structure comprising a plurality of winded pathways (132) extending substantially from one of the electrode sheets to a surface of a lateral side of the electrode-separator stack, such that openings (134) remain between the winded pathways (132).

9. The method according to any one of the preceding claims 7 and 8, wherein the pathways (132) are arranged such that in a perpendicular extension from the electrode sheet to the surface of the lateral side of the electrode-separator stack, a plurality of pathways (132) are crossed.

10. The method according to any one of the preceding claims, wherein each electrode sheet comprises a tab region (112a, 112b) that extends beyond the separator foil,
wherein sealing the separator foil comprises:
sealing the separator foil at one or more lateral sides of the electrode-separator stack that do not comprise a tab region, or
sealing the separator foil at all lateral sides of the electrode-separator stack,
except from portions of the lateral sides of the electrode-separator stack at which the respective tab regions extend beyond the separator foil.

11. The method according to any one of the preceding claims, wherein
in a top view of the electrode-separator stack the separator sheets protrude from the electrode sheets on at least one lateral side in an edge region of the electrode-separator stack, wherein the one or more sealed portions are arranged at the edge region,
wherein optionally, prior to sealing the separator foil, a predefined pressure is applied to the separator foil at the edge region such that air is evacuated from the edge region.

12. The method according to any one of the preceding claims, wherein sealing the separator foil comprises welding, optionally ultrasound welding or laser welding, or
wherein sealing the separator foil comprises heat sealing.

13. The method according to any one of the preceding claims, wherein in a side view of the electrode-separator stack, the one or more sealed portions (130a, 130b) are arranged above the bottom of the electrode-separator stack and below the top of the electrode-separator stack, such that a lower separator sheet is bent upwards in the edge region and an upper separator sheet is bent downwards in the edge region.

14. The method according to any one of the preceding claims, wherein the
separator foil comprises at least one of the following materials:
• cellulose,
• lignocellulose, and/or
wherein the separator foil further comprises a coating comprising a coating material,
wherein the one or more sealed portions connect the respective coatings of the first and the second separator sheet of the separator foil.

15. An energy storage device comprising an electrode-separator stack, the
electrode-separator stack comprising:
at least a first electrode sheet (110a) and a second electrode sheet (110b) on top of the first electrode sheet (110a),
at least a first separator sheet (120a) of a separator foil below the first electrode sheet (110a), a second separator sheet (120b) of the separator foil between the first electrode sheet (110a) and the second electrode sheet (110b), and a third separator sheet (120c) of the separator foil on top of the second electrode sheet (110b),
wherein the separator foil comprises one or more sealed portions (130a, 130b) at one or more lateral sides of the electrode-separator stack, wherein
the one or more sealed portions (130a, 130b) connect the first separator sheet (120a), the second separator sheet (120b) and the third separator sheet (120c) of the separator foil.
